# EUROPEAN PATENT APPLICATION

(11) **EP 2 990 776 A1**
(43) Date of publication of application: **02.03.2016**
(21) Application number: 15182963.7
(22) Date of filing: 28.08.2015
(51) Int. Cl.: G01N 7/14, G01N 29/14, G01N 5/04

(54) **APPARATUS FOR STUDYING SAMPLES**

(30) Priority: 01.09.2014 FI 20145756
(71) Applicant: MicroAtmos Oy, 24100 Salo (FI)
(72) Inventor: Eeva, Salminen, 24100 Salo (FI)
(74) Representative: Kolster Oy Ab

(57) **Abstract**

The invention relates to an apparatus and a method for studying samples. A sample is studied using an apparatus comprising a gas tight chamber for receiving the sample. The chamber is formed by a casing, which casing comprises a gas inlet and a gas outlet. The apparatus further comprises gas supply means for regulating the pressure in the chamber, heat regulation means for regulating the temperature in the chamber, and measuring means for studying the sample. Desired environmental conditions are created for the sample. The properties and/or reactions of the sample may be measured in real time.

## Description

### FIELD OF THE INVENTION

The invention relates to an apparatus and a method for studying samples.

### BRIEF DESCRIPTION OF THE INVENTION

An object of the invention is to provide a new apparatus and method for studying samples.

The invention is characterized by the features of the independent claims. Embodiments of the invention are disclosed in the dependent claims.

According to an embodiment, a sample is studied using an apparatus comprising a gas tight chamber for receiving the sample. The chamber is formed by a casing, which casing comprises a gas inlet and a gas outlet. The apparatus further comprises gas supply means for regulating the pressure in the chamber, heat regulation means for regulating the temperature in the chamber, and measuring means for studying the sample. Desired environmental conditions are created for the sample. The properties and/or reactions of the sample may be measured in real time. The environmental conditions, such as pressure, temperature and/or humidity, are easily adjusted by the gas supply means and the heat regulation means. The measurements may be online during the whole study of the sample and the measurements do not disturb the sample under study. The apparatus is easy to provide with desired measurement instruments and the environmental conditions for the sample are easily regulated.

### BRIEF DESCRIPTION OF THE DRAWINGS

In the following, the invention will be described in greater detail by means of preferred embodiments and with reference to the accompanying drawings, in which
Figure 1 is a schematic cross-sectional side view of an apparatus for studying samples, and
Figure 2 is a schematic representation of an apparatus comprising a plurality of chambers.

### DETAILED DESCRIPTION OF THE EMBODIMENTS

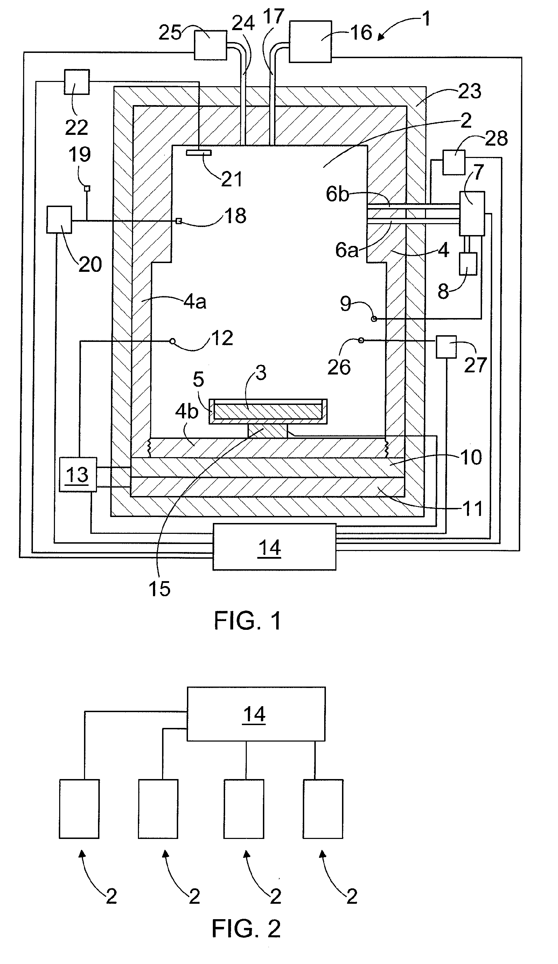

Figure 1 shows an apparatus 1 for studying samples. The apparatus 1 comprises a gas tight chamber 2 for receiving a sample 3 to be studied.

The apparatus 1 may be used in medical study, bioanalysis, chemistry, food industry, or electronic industry, for example. Thus, the sample 3 may be a bacterium or bacteria, a virus, a plant, an electronic component, etc.

The chamber 2 is formed by a casing 4. The casing 4 is formed of an upper part 4a of the casing and a lower part 4b of the casing. The upper part 4a and the lower part 4b are connected in a gas tight manner such that they form the gas tight chamber 2. The connection between the upper part 4a and the lower part 4b may be a thread, for example, such that the upper part 4a and the lower part 4b may be disconnected such that it is easy to position the sample 3 inside the chamber 2. Naturally, the connection between the upper part 4a and the lower part 4b is provided with a sealing for ensuring a leak tight connection.

The sample 3 may be provided inside the chamber 2 as such or the sample 3 may lay on a substrate. One example of the substrate is a Petri dish. The size of the Petri dish 5 or any other substrate may vary as necessary. Correspondingly, the size of the chamber 2 may vary as necessary. The diameter of the Petri dish 5 may be in a range of 20 mm to 10 cm, for example. Correspondingly, the size of the chamber 2 may vary from 20 ml to 5 litres, for example. In an embodiment, the size of the chamber 2 is equal to or less than 5 litres. In another embodiment, the size of the chamber 2 is less than 3 litres. When the size of the chamber 2 is small, the chamber 2 thus having a size that is equal to or less than 5 litres, for example, the solution as a whole is simple, small and reliable.

A wall of the casing 4 may be made of a material that has good heat conduction properties. One example of the material of the wall of the casing 4 is aluminium. Another example of the wall of the casing is copper. Any other suitable material may also be used. The thickness of the wall of the casing 4 may be in a range of 3 to 30 mm, for example.

In the embodiment shown in Figure 1, the casing wall is thicker in the upper part of the chamber 2 than in the lower part of the chamber. This provides the feature that heat distribution is easily optimized.

In the embodiment shown in Figure 1, the cross-sectional area of the chamber 2 is smaller in the upper part of the chamber 2 than in the lower part of the chamber 2. Otherwise, the overall shape of the chamber 2 may be that of a cylinder, for example. The structure of the chamber 2 wherein the cross-sectional area of the chamber is smaller in the upper part of the chamber than in the lower part of the chamber improves the heat distribution properties of the apparatus. Furthermore, the above-mentioned shape improves the acoustical properties of the chamber 2 as well.

An inner surface of the casing 4 may be provided with a coating. The coating may be antibacterial, for example. One example of the material for the coating is silver. The coating may be applied by an Atomic Layer Deposition (ALD) method, for example. Thus, the coating may be a suitable nanocoating applied by the ALD method, for example.

The casing 4 also comprises a gas inlet 6a and a gas outlet 6b. The apparatus is provided with gas supply control means 7 for supplying gas and for regulating the pressure in the chamber 2. The apparatus 1 comprises a gas container 8 wherefrom the gas is supplied to the chamber 2. The supplied gas may be air, oxygen, nitrogen, or any other suitable gas or gas mixture.

For regulating the pressure in the chamber 2, the apparatus also comprises a pressure sensor 9 that is connected to the gas supply control means 7. The pressure inside the chamber 2 may be higher than atmospheric pressure or lower than atmospheric pressure. The gas supply control means 7 automatically adjust the gas and pressure conditions needed. The chamber 4 may be closed such that the supplied gas remains inside the chamber 2, or the gas may flow freely, thus flushing the environment inside the chamber 2 constantly.

The supplied gas and the gas supply control means 7 may also be used for regulating the humidity inside the chamber 2. Also the pressure and the temperature inside the chamber 2 have an effect on the humidity inside the chamber 2.

The apparatus 1 further comprises heat regulation means for regulating the temperature in the chamber 2. The heat regulation means comprise a heating element. One example of the heating element is a Peltier element 10. In connection with the heating element, the apparatus 1 may comprise a heat sink 11 and/or a fan. The heat sink and/or the fan are used for thermal management. The temperature inside the chamber 2 is measured by a thermal sensor 12. The thermal sensor 12 may be thermocouple, for example. The thermal sensor 12 is connected to temperature control means 13 which control the heating element and also the possible heat sink and fan.

The Peltier element 10 may control the temperature such that the temperature may vary between - 5 °C and + 60 °C, for example.

Figure 1 also schematically shows a control unit 14 of the apparatus 1. The control unit 14 may be a unit separate from the gas supply control means 7 and the temperature control means 13, for example. The control unit 14 may thus be a unit separate from the control and measuring means denoted in Figure 1. The control unit 14 may also comprise one or more of the control or measuring means denoted in Figure 1 such that they are integral parts of the control unit or, in other words, operational blocks of the control unit 14.

The apparatus 1 shown in Figure 1 also comprises a light source 15. If the apparatus is used for studying electronic components, for example, no light source is necessarily needed. The light source 15 may be a LED, for example. The colour or wavelength of the light source 15 depends on the sample 3 under study or the properties being measured. The wavelength of the light source 15 may vary between ultraviolet and infrared, for example.

The light source 15 may provide illumination inside the chamber to regulate the environment in which the sample 3 resides during the study. The light source 15 may also be a light source for optical spectroscopy, for example.

The sample 3 under study may be measured by a spectrometer 16, for example. The spectrometer 16 is connected by an optical fibre 17 inside the chamber. The spectrometer 16 detects the illumination inside the chamber 2. The spectrometer 16 can be used for measuring light absorption of the sample 3 under study, for example. The spectrometer 16 may also be used for measuring light emission of the sample 3 under study, for example.

The apparatus 1 may also comprise a microphone 18. The microphone 18 detects small pressure changes inside the chamber 2 and thus in real time provides measurement results of the sample 3 under study. The apparatus 1 also comprises a reference microphone 19 outside of the chamber 2. The signals from the microphone are guided to a control unit 20 for acoustic measurements.

The microphone may be an optical microphone, for example. An optical microphone is small and highly accurate. Particularly if the optical microphone is the only measuring means in the apparatus, the casing 4 may be extremely small. In addition to sound detected by human senses, the microphones may also detect ultra sound, for example.

The microphone may detect small pressure changes caused by the sample. Growth of bacteria may cause a pressure change, for example. If two or more microphones are used inside the chamber the sample may be observed three dimensionally. Thus, a three dimensional detection of the sample may be produced.

The apparatus 1 may also comprise a speaker 21. The speaker 21 may create changing pressure conditions inside the chamber 2 by applying sound. The speaker 21 may create a pulsating pressure, for example. The speaker 21 is controlled by a control unit 22 for the speaker.

The apparatus 1 may also be provided with mechanical shaking means for shaking the sample. Thus, the apparatus may be used for detecting how the sample reacts to changing pressure conditions and/or shaking, for example.

The casing 4 is covered with an insulator 23. The insulator 23 provides a thermal insulation and an acoustic insulation. The insulator 23 may be made of a porous material. The insulator 23 may be made of polyurethane, for example.

The apparatus 1 also comprises an optical fibre 24 that is connected to a camera 25. Thus, the camera 25 may be one of the measuring means that is used for studying the sample 3. The camera 25 may also be a video camera. Thus, pictures and/or video may be taken of the sample for studying the sample.

The apparatus 1 may also comprise a pH sensor 26. The pH sensor 26 is connected to a control unit 27 for the pH sensor. The pH may be measured by taking a sample from the sample 3 under study. The pH may also be measured from the gas exiting the chamber 2. In an embodiment the pH is measured without touching the sample 3. The pH may be measured without touching the sample by using optical methods for measuring, for example.

A mass spectrometer 28 may be connected to the gas outlet 6b. The mass spectrometer 28 may be used for taking real-time samples from the gas inside the chamber and the sample 3 under study.

Desired environmental conditions may be created inside the chamber 2. Thus, the chamber 2 may also be called a micro environment chamber. The sample 3 may be studied in real time. The sample 3 may be detected, measured and observed without contacting the sample 3 under study. Thus, a non-contact method of measurement may be used. The sample 3 under study is positioned in the desired environmental conditions. Even toxic and otherwise dangerous samples may be studied in a safe manner. If need be, the casing and the components needed may be safely destroyed.

All of the measuring means for studying the sample may be used either alone or together with one or more of the other measuring means. The apparatus may be provided with desired measuring means and control means as per need.

According to an embodiment, the studied sample is a bacterium and an antibiotic is added to the sample. The sample is detected before and after adding the antibiotic.

According to another embodiment, the growth of the sample is detected. In such a case, the sample may be a plant, for example. It is possible to compare how different environmental conditions affect the sample.

According to a yet another embodiment, the studied sample is a sensor. The sensor may be a gas sensor, for example. The sensitivity of the sensor may be measured in a highly accurately controlled environment, for example. Thereby the sensor may be calibrated and its performance may be determined.

It is possible to place the sample 3 inside the chamber 2, close the chamber and start the measurements. It is also possible to feed or supply the sample 3 or an additive to a closed chamber 2. The supply of the sample or the additive may be made mechanically by using an injector syringe, for example. An example of the additive may be an antibiotic. In such a case the sample may comprise bacteria and antibiotic is added inside the chamber.

It is also possible to use an automatic dosing feeder for feeding or supplying the sample and/or the additive. In such a case the chamber 2 may be provided with a channel or pipe for the supply of the sample and/or the additive.

As shown in Figure 2 the apparatus may comprise two or more chambers 2. Figure 2 shows an apparatus comprising four chambers 2.

Each chamber 2 may comprise control and measuring means of its own. It is also possible that two or more chambers 2 utilize common control and/or measuring means.

In an embodiment one control unit controls the temperature in two or more chambers and/or one control unit controls the gas supply in two or more chambers and/or one control unit controls the acoustic supply and/or measurement means in two or more chambers. Also the temperature may be measured by a common unit receiving temperature measurement signals from two or more chambers.

Particularly, if the environmental conditions are controlled to be similar in at least two chambers, it is simple to use common control means in those chambers.

Each chamber 2 may be provided with a similar sample 3 and the environmental conditions may be similar in each chamber 2. Thus, in such a case same measurements are performed simultaneously, whereby comparisons between different measurements can be made efficiently and rapidly.

It is also possible to provide the chambers with similar samples, but the environmental conditions in each chamber may be different. Thus, in such a case the effect of the environmental conditions on the sample may be studied rapidly and efficiently.

It is also possible to provide each chamber with a different sample, but arrange the environmental conditions to be similar in each chamber. Thus, in such a case the comparison between different samples in similar environmental conditions can be performed efficiently and rapidly.

It is also possible to provide different samples in each chamber and to adjust the environmental conditions to be different in each chamber 2. In such a case, the apparatus may be used for studying simultaneously different samples in different environmental conditions.

Thus, each or at least two chambers may be provided with either similar or different environmental conditions. Also each or at least two chambers may be provided with either similar or different samples.

It will be obvious to a person skilled in the art that, as technology advances, the inventive concept can be implemented in various ways. The invention and its embodiments are not limited to the examples described above but may vary within the scope of the claims.

## Claims

1. An apparatus for studying samples, the apparatus comprising:
a gas tight chamber for receiving a sample, the size of the chamber being equal to or less than 5 litres,
whereby the chamber is formed by a casing, which casing comprises a gas inlet and a gas outlet,
gas supply means for regulating the pressure in the chamber,
heat regulation means for regulating the temperature in the chamber, and
measuring means for studying the sample.

2. An apparatus as claimed in claim 1, wherein the apparatus further comprises a light source for illuminating the sample.

3. An apparatus as claimed in claim 1 or 2, wherein the measuring means comprise a spectrometer.

4. An apparatus as claimed in any one of the preceding claims, wherein the measuring means comprise a microphone.

5. An apparatus as claimed in claim 4, wherein the apparatus further comprises a reference microphone.

6. An apparatus as claimed in any one of the preceding claims, wherein the apparatus comprises an insulator for covering the casing.

7. An apparatus as claimed in any one of the preceding claims, wherein the apparatus further comprises a mass spectrometer provided in connection with the gas outlet.

8. An apparatus as claimed in any one of the preceding claims, wherein a wall of the casing is thicker in an upper part of the chamber than in a lower part of the chamber.

9. An apparatus as claimed in any one of the preceding claims, wherein the cross sectional area of the chamber is smaller in the upper part of the chamber than in the lower part of the chamber.

10. An apparatus as claimed in any one of the preceding claims, wherein the apparatus further comprises a speaker for applying pressure changes in the chamber.

11. An apparatus as claimed in the any one of the preceding claims, wherein the apparatus comprises a heat sink in connection with the heat regulation means.

12. A method of studying samples, the method comprising:
providing a sample in a gas tight chamber, the size of the chamber being equal to or less than 5 litres,
supplying gas into the chamber for regulating the pressure in the chamber,
regulating the temperature in the chamber, and
studying the sample by measuring at least one property of the sample online and in real time.

13. A method as claimed in claim 12, wherein the sample is measured without contacting the sample.

14. A method as claimed in claim 12 or 13, wherein the sample is illuminated while studying the sample.

15. A method as claimed in any one of the claims 12 to 14, wherein measuring the at least one property of the sample comprises measuring pressure changes in the chamber by a microphone.
